# EUROPEAN PATENT APPLICATION

(11) **EP 4 711 584 A1**
(43) Date of publication of application: **18.03.2026**
(21) Application number: 25185253.9
(22) Date of filing: 25.06.2025
(51) Int. Cl.: F01D 11/08, B22F 5/00, B33Y 80/00, F01D 25/12

(54) **COOLING SEGMENT AND GAS TURBINE**

(30) Priority: 12.09.2024 KR 20240125162
(71) Applicant: Doosan Enerbility Co., Ltd., Seongsan-gu Changwon-si, Gyeongsangnam-do 51711 (KR)
(72) Inventor: KIM, Jeong Ju, 13629 Seongnam-si, Gyeonggi-do (KR)
(74) Representative: BCKIP Part mbB

(57) **Abstract**

A cooling segment (11) includes a segment body (342) and a cooling flow path (344) provided in the segment body, so that a cooling medium is movable in the cooling flow path. The cooling flow path comprises a first twist flow path (344a) helically extending around a preset reference line, and a second twist flow path (344b) helically extending around the reference line collectively with the first twist flow path.

A gas turbine (10) includes a compressor (100) configured to suck in and compress air; a combustor (200) configured to mix the air, which is compressed by the compressor, with fuel and combust an air-fuel mixture, and a turbine (300). The turbine includes a turbine casing (310), a turbine vane (330) provided on an inner surface of the turbine casing, a turbine blade (320) rotatably provided in the turbine casing, and the cooling segment (11) provided on the inner surface of the turbine casing and configured to be exposed to combustion gas discharged from the combustor.

## Description

This application claims priority to and the benefit of Korean Patent Application No. 10-2024-0125162 filed in the Korean Intellectual Property Office on September 12, 2024.

### TECHNICAL FIELD

The present disclosure relates to a cooling segment and a gas turbine including the same, and more particularly, to a cooling segment capable of improving performance and efficiency in cooling the cooling segment, and a gas turbine including the same.

### BACKGROUND ART

A turbine refers to a mechanical device that obtains a rotational force from an impact force or reaction force by using a flow of a compressible fluid such as vapor and gas. The turbines are classified into a vapor turbine using vapor, and a gas turbine using high-temperature combustion gas.

The gas turbine is configured to convert thermal energy into mechanical energy by rotating a turbine by injecting high-temperature, high-pressure combustion gas, which is produced by mixing fuel with high-pressure air compressed by a compressor and then combusting the fuel, into the turbine.

More specifically, the gas turbine includes a compressor configured to compress air, a combustor configured to produce a combustion gas by combusting fuel and the compressed air supplied from the compressor, and a turbine configured to rotate a rotor by means of turbine blades rotated by the high-temperature, high-pressure combustion gas discharged from the combustor.

In addition, a plurality of ring segments are provided in a turbine casing that accommodates the turbine blades therein. The plurality of ring segments serve to prevent a leak of the high-temperature, high-pressure combustion gas (or prevent a leak of cooling air) and define tip clearances between the turbine casing and the turbine blades. The plurality of ring segments are provided in a circumferential direction of the turbine casing and surround outer peripheries of the turbine blades.

Meanwhile, one surface of a cooling segment (e.g., the ring segment or a vane carrier), which faces an internal space of the turbine casing, is exposed to the high-temperature, high-pressure combustion gas. Because the cooling segment may be damaged or broken by a thermal load applied by the combustion gas, the cooling segment needs to be effectively cooled.

Therefore, in the related art, there has been a configuration in which a cooling flow path is provided in the cooling segment, and the cooling segment is cooled by means of a cooling medium (e.g., air) moving along the cooling flow path.

However, in the related art, there is a problem in that it is difficult to increase a heat exchange area (heat exchange area per unit area) of the cooling flow path to a certain degree or higher while ensuring structural rigidity of the cooling segment, and it is difficult to ensure sufficient performance and efficiency in cooling the cooling segment.

Therefore, recently, various studies have been conducted to improve cooling performance and cooling efficiency while ensuring the structural rigidity of the cooling segment. However, the results remain insufficient. Accordingly, there is a need to develop a technology that improves cooling performance and cooling efficiency while ensuring structural rigidity of the cooling segment.

### SUMMARY

The present disclosure has been made in an effort to provide a cooling segment capable of improving performance and efficiency in cooling the cooling segment, and a gas turbine including the same.

In particular, the present disclosure has been made in an effort to ensure a sufficient heat exchange area in a cooling flow path and improve cooling performance and cooling efficiency while ensuring structural rigidity of the cooling segment.

Among other things, the present disclosure has been made in an effort to maximize a heat exchange area per unit area of the cooling flow path while ensuring the structural rigidity of the cooling segment.

The present disclosure has also been made in an effort to reduce costs and improve stability and reliability.

The objects to be achieved by the embodiments are not limited to the above-mentioned objects, but also include objects or effects that may be understood from the solutions or embodiments described below.

In order to achieve the above-mentioned objects, an exemplary embodiment of the present disclosure provides a cooling segment including: a segment body; and a cooling flow path provided in the segment body so that a cooling medium is movable in the cooling flow path, the cooling flow path including a first twist flow path helically extending around a preset reference line, and a second twist flow path helically extending around the reference line collectively with the first twist flow path.

This is to improve performance and efficiency in cooling the cooling segment.

That is, in the related art, there is a problem in that it is difficult to increase a heat exchange area (heat exchange area per unit area) of the cooling flow path to a certain degree or higher while ensuring structural rigidity of the cooling segment, and it is difficult to ensure sufficient performance and efficiency in cooling the cooling segment. In particular, the heat exchange area per unit area of the cooling flow path may be ensured by increasing a cross-sectional area (e.g., diameter) of the cooling flow path. However, there is a problem in that it is difficult to ensure structural rigidity of the ring segment as the cross-sectional area of the cooling flow path increases.

In contrast, according to the embodiment of the present disclosure, the cooling flow path is formed by using the first and second twist flow paths having the helical or spiral shapes, such that it is possible to obtain an advantageous effect of ensuring the heat exchange area of the cooling flow path and improving cooling performance and cooling efficiency while ensuring structural rigidity of the cooling segment.

Among other things, according to the embodiment of the present disclosure, the cooling flow path is formed by allowing the first and second twist flow paths having the helical shapes to intersect each other, such that it is possible to obtain an advantageous effect of maximizing the heat exchange area per unit area of the cooling flow path while ensuring the structural rigidity of the cooling segment.

The segment body may be manufactured in various ways in accordance with required conditions and design specifications.

According to the exemplary embodiment of the present disclosure, the segment body may be formed by additive manufacturing. The cooling flow path may be integrally provided in the segment body while the segment body is formed by additive manufacturing.

The first and second twist flow paths may be provided to have various structures in accordance with required conditions and design specifications.

According to the exemplary embodiment of the present disclosure, the first twist flow path and the second twist flow path may be helically extending around the reference line in the same direction based on the reference line.

According to the exemplary embodiment of the present disclosure, the first twist flow path and the second twist flow path may be provided to have circular cross-sections.

In particular, the first twist flow path and the second twist flow path may be provided to have the same diameter.

The first and second twist flow paths may be variously changed in diameters in accordance with required conditions and design specifications.

According to the exemplary embodiment of the present disclosure, the diameter of each of the first twist flow path and the second twist flow path may be in a range of 0.6 mm to 3 mm.

This is based on the fact that it is very difficult to process (manufacture) the first twist flow path and the second twist flow path and to smoothly move the cooling medium when the diameter of each of the first twist flow path and the second twist flow path is smaller than 0.6 mm, and it is difficult to ensure the structural rigidity of the segment body when the diameter of each of the first twist flow path and the second twist flow path is larger than 3 mm. In the embodiment of the present disclosure, the diameter of each of the first twist flow path and the second twist flow path may be in a range of 0.6 mm to 3 mm. Therefore, it is possible to obtain an advantageous effect of ensuring the structural rigidity of the segment body and ensuring the smooth manufacturing of the first twist flow path and the second twist flow path.

According to the exemplary embodiment of the present disclosure, centers of the first and second twist flow paths may lie on a reference circle centered on the reference line.

The reference circle may be defined as having various sizes in accordance with required conditions and design specifications.

According to the exemplary embodiment of the present disclosure, a diameter of the reference circle may be defined as 2 mm to 9 mm.

This is based on the fact that it is difficult to ensure the structural rigidity of the segment body when the diameter of the reference circle is smaller than 2 mm, and it is difficult to ensure a sufficient heat transfer coefficient of the segment body when the diameter of the reference circle is larger than 9 mm. In the embodiment of the present disclosure, the diameter of the reference circle, which defines torsional trajectories of the first twist flow path and the second twist flow path, is defined as 2 mm to 9 mm. Therefore, it is possible to obtain an advantageous effect of ensuring the structural rigidity of the segment body and ensuring a sufficient heat transfer coefficient of the segment body.

The torsional angles of the first and second twist flow paths with respect to the reference line may be variously changed in accordance with required conditions and design specifications.

According to the exemplary embodiment of the present disclosure, a torsional angle of each of the first and second twist flow paths with respect to the reference line may be in a range of 10 degrees to 60 degrees.

This is based on the fact that the heat exchange areas of the first and second twist flow paths with respect to the segment body are decreased and the heat exchange efficiency deteriorates when the torsional angle of the first and second twist flow paths with respect to the reference line is smaller than 10 degrees, and it is difficult to manufacture the first and second twist flow paths with respect to the segment body by additive manufacturing and the improvement of cooling performance is not significant when the torsional angle of the first and second twist flow paths with respect to the reference line is larger than 60 degrees. In the embodiment of the present disclosure, the torsional angles θ1, θ2, θ3, and θ4 of the first and second twist flow paths with respect to the reference line are defined as 10 degrees to 60 degrees. Therefore, it is possible to obtain an advantageous effect of sufficiently ensuring the heat exchange areas of the first and second twist flow paths with respect to the segment body (cooling performance implemented by the first and second twist flow paths) and improving the manufacturing efficiency and productivity.

Another exemplary embodiment of the present disclosure provides a gas turbine including: a compressor configured to suck in and compress air; a combustor configured to mix the air, which is compressed by the compressor, with fuel and combust an air-fuel mixture; and a turbine including a turbine casing, a turbine vane provided on an inner surface of the turbine casing, a turbine blade rotatably provided in the turbine casing, and a cooling segment provided on the inner surface of the turbine casing and configured to be exposed to combustion gas discharged from the combustor, in which the cooling segment includes: a segment body provided on the inner surface of the turbine casing and configured to be exposed to the combustion gas; and a cooling flow path provided in the segment body and including a first twist flow path helically extending around a preset reference line, and a second twist flow path helically extending around the reference line collectively with the first twist flow path.

According to the exemplary embodiment of the present disclosure, the cooling segment may include at least one of a vane carrier provided on the inner surface of the turbine casing and configured to support the turbine vane, and a ring segment configured to face the turbine blade, spaced apart from the turbine blade, and provided on the inner surface of the turbine casing.

According to the exemplary embodiment of the present disclosure, the segment body may be formed by additive manufacturing. The cooling flow path may be integrally provided in the segment body while the segment body is formed by the additive manufacturing.

According to the exemplary embodiment of the present disclosure, the first twist flow path and the second twist flow path may be helically extending around the reference line in the same direction based on the reference line.

According to the exemplary embodiment of the present disclosure, the first twist flow path and the second twist flow path may be provided to have circular cross-sections.

According to the exemplary embodiment of the present disclosure, the first and second twist flow paths may be provided to have the same diameter.

According to the exemplary embodiment of the present disclosure, the diameter of each of the first twist flow path and the second twist flow path may be in a range of 0.6 mm to 3 mm.

According to the exemplary embodiment of the present disclosure, centers of the first and second twist flow paths may lie on a reference circle centered on the reference line.

According to the exemplary embodiment of the present disclosure, a diameter of the reference circle may be in a range of 2 mm to 9 mm.

According to the exemplary embodiment of the present disclosure, a torsional angle of each of the first and second twist flow paths with respect to the reference line may be in a range of 10 degrees to 60 degrees.

According to the present disclosure described above, it is possible to obtain an advantageous effect of improving the performance and efficiency in cooling the cooling segment.

In particular, according to the present disclosure, it is possible to obtain an advantageous effect of ensuring the heat exchange area of the cooling flow path and improving the cooling performance and cooling efficiency while ensuring the structural rigidity of the cooling segment.

Among other things, according to the present disclosure, it is possible to obtain an advantageous effect of maximizing the heat exchange area per unit area of the cooling flow path while ensuring the structural rigidity of the cooling segment.

In addition, according to the present disclosure, it is possible to obtain an advantageous effect of reducing costs and improving the stability and reliability.

### BRIEF DESCRIPTION OF THE DRAWINGS

FIG. 1 is a view for explaining a gas turbine according to an embodiment of the present disclosure.
FIGS. 2 and 3 are views for explaining a cooling segment of the gas turbine according to the embodiment of the present disclosure.
FIGS. 4 to 5 are views for explaining a cooling flow path in the cooling segment according to the embodiment of the present disclosure.
FIGS. 6 to 9 are views for explaining a modified example of the cooling flow path according to the embodiment of the present disclosure.
FIGS. 10 and 11 are views for explaining a temperature of the cooling segment in accordance with a torsional angle of a twist flow path with respect to a reference line according to the embodiment of the present disclosure.

### DETAILED DESCRIPTION

Hereinafter, exemplary embodiments of the present disclosure will be described in detail with reference to the accompanying drawings.

However, the technical spirit of the present disclosure is not limited to the embodiments described herein but may be implemented in various different forms. One or more of the constituent elements in the embodiments may be selectively combined and substituted for use within the scope of the technical spirit of the present disclosure.

In addition, unless otherwise specifically and explicitly defined and stated, the terms (including technical and scientific terms) used in the embodiments of the present disclosure may be construed as the meaning which may be commonly understood by the person with ordinary skill in the art to which the present disclosure pertains. The meanings of the commonly used terms such as the terms defined in dictionaries may be interpreted in consideration of the contextual meanings of the related technology.

In addition, the terms used in the embodiments of the present disclosure are for explaining the embodiments, not for limiting the present disclosure.

In the present specification, unless particularly stated otherwise, a singular form may also include a plural form. The expression "at least one (or one or more) of A, B, and C" may include one or more of all combinations that can be made by combining A, B, and C.

In addition, the terms such as first, second, A, B, (a), and (b) may be used to describe constituent elements of the embodiments of the present disclosure.

These terms are used only for the purpose of discriminating one constituent element from another constituent element, and the nature, the sequences, or the orders of the constituent elements are not limited by the terms.

Further, when one constituent element is described as being 'connected,' 'coupled,' or 'attached' to another constituent element, one constituent element may be connected, coupled, or attached directly to another constituent element or connected, coupled, or attached to another constituent element through still another constituent element interposed therebetween.

In addition, the expression "one constituent element is provided or disposed above (on) or below (under) another constituent element" includes not only a case in which the two constituent elements are in direct contact with each other, but also a case in which one or more other constituent elements are provided or disposed between the two constituent elements. The expression "above (on) or below (under)" may mean a downward direction as well as an upward direction based on one constituent element.

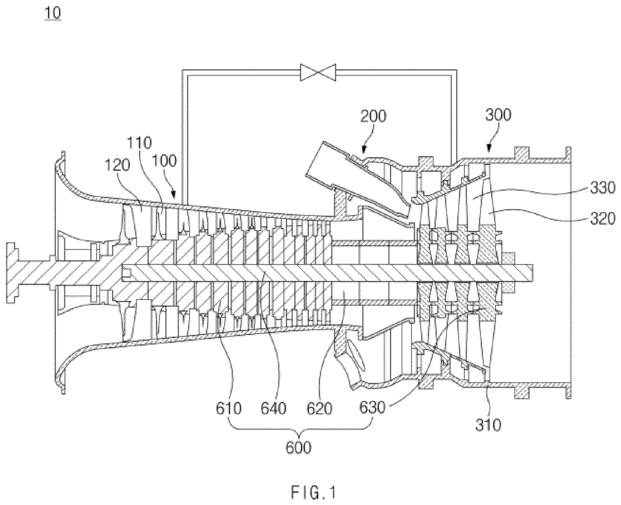

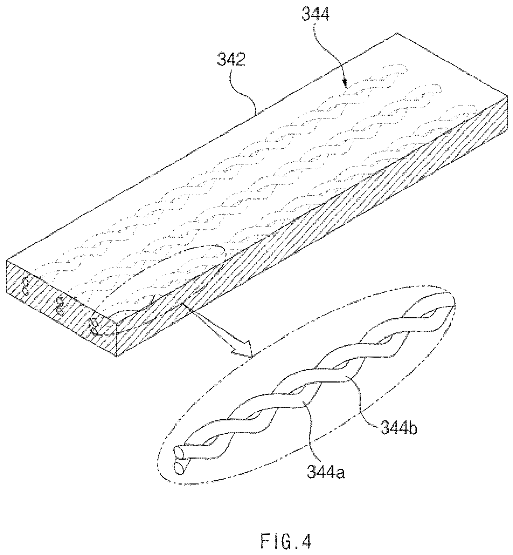

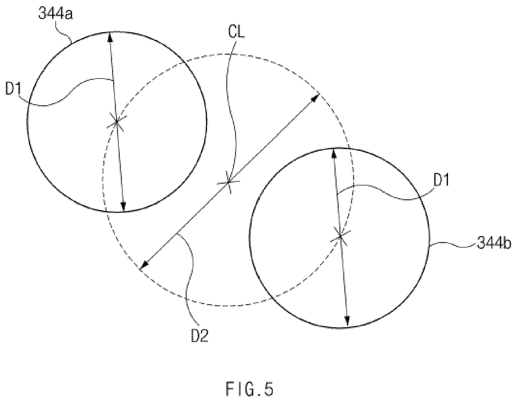

With reference to FIGS. 1 to 11, a cooling segment CS according to an embodiment of the present disclosure includes a segment body 342, and a cooling flow path 344 provided in the segment body 342 so that a cooling medium is movable in the cooling flow path 344, the cooling flow path 344 including a first twist flow path 344a helically extending around a preset reference line CL, and a second twist flow path 344b helically extending around the reference line CL collectively with the first twist flow path 344a.

The cooling segment CS may be applied to various objects in accordance with required conditions and design specifications. The present disclosure is not restricted or limited by the type and structure of the object to which the cooling segment CS is applied.

Hereinafter, an example will be described in which the cooling segment CS according to the embodiment of the present disclosure is applied to a gas turbine 10 including a compressor 100, a combustor 200, and a turbine 300.

For reference, the gas turbine 10 is configured to suck in atmospheric air, compress the air into high-pressure air, combust fuel in a constant-pressure environment, release heat energy generated by combustion, and expand high-temperature combustion gas to generate kinetic energy.

With reference to FIGS. 1 to 3, according to the exemplary embodiment of the present disclosure, the gas turbine 10 includes a compressor configured to suck in and compress air, a combustor configured to mix fuel with the air compressed by the compressor and combust the air-fuel mixture, and a turbine including a turbine casing, turbine vanes provided on an inner surface of the turbine casing, turbine blades rotatably provided in the turbine casing, and the cooling segment CS provided on the inner surface of the turbine casing and configured to be exposed to combustion gas discharged from the combustor. The cooling segment CS includes the segment body 342 provided on the inner surface of the turbine casing and configured to be exposed to the combustion gas, and the cooling flow path 344 provided in the segment body 342 and including the first twist flow path 344a helically extending around the preset reference line CL, and the second twist flow path 344b helically extending around the reference line CL collectively with the first twist flow path 344a.

The compressor 100 is configured to suck in air from the outside and compress the air.

For example, the compressor 100 may supply the compressed air, which is compressed by compressor blades 110, to the combustor 200 and supply cooling air to a high-temperature region of the gas turbine 10 required to be cooled.

Various compressors 100 may be used as the compressor 100 in accordance with required conditions and design specifications. The present disclosure is not restricted or limited by the type and structure of the compressor 100.

For example, the compressor 100 may be designed as a centrifugal compressor or an axial compressor. The centrifugal compressor may be used for a small-scale gas turbine, and a multi-stage axial compressor may be used for a large-scale gas turbine.

According to the exemplary embodiment of the present disclosure, the compressor 100 may include the compressor blades 110 configured to rotate together with a rotor 600, and compressor vanes 120 installed on a compressor casing (not illustrated) and configured to align a flow of air introduced to the compressor blades 110.

For reference, the rotor 600 may include compressor rotor discs 610 accommodated in the compressor casing (not illustrated), turbine rotor discs 630 accommodated in a turbine casing 310, a torque tube 620 accommodated in the combustor casing (not illustrated) and configured to connect the compressor rotor discs 610 and the turbine rotor discs 630, and a tie rod 640 and a fixing nut (not illustrated) configured to fasten the compressor rotor discs 610, the torque tube 620, and the turbine rotor discs 630.

The compressor rotor discs 610 may be provided as a plurality of (e.g., fourteen) compressor rotor discs 610, and the plurality of compressor rotor discs 610 may be arranged in an axial direction of the rotor 600. That is, the compressor rotor discs 610 may be formed in multiple stages.

In addition, the compressor rotor discs 610 may each be formed in an approximately circular plate shape. Compressor blade coupling slots (not illustrated) may be formed in an outer circumferential portion of the compressor rotor disc 610 and coupled to the compressor blades 110 to be described below.

The turbine rotor disc 630 may be formed to be similar to the compressor rotor disc 610. That is, the turbine rotor discs 630 may be provided as a plurality of turbine rotor discs 630, and the plurality of turbine rotor discs 630 may be arranged in multiple stages in the axial direction of the rotor 600.

The turbine rotor disc 630 may be formed in an approximately circular plate shape. Turbine blade coupling slots (not illustrated) may be formed in an outer circumferential portion of the turbine rotor disc 630 and coupled to turbine blades 320 to be described below.

The torque tube 620 refers to a torque transmission member configured to transmit a rotational force of the turbine rotor disc 630 to the compressor rotor disc 610. One end of the torque tube 620 may be fastened to the compressor rotor disc positioned at a most downstream end based on a flow direction of the air among the plurality of compressor rotor discs 610, and the other end of the torque tube 620 may be fastened to the turbine rotor disc 630 positioned at a most upstream end based on a flow direction of the combustion gas among the plurality of turbine rotor discs 630.

Protrusions (not illustrated) may be formed at one end and the other end of the torque tube 620, and grooves (not illustrated), which engage with the protrusions, may be formed in the compressor rotor disc 610 and the turbine rotor disc 630, such that a relative rotation of the torque tube 620 relative to the compressor rotor disc 610 and the turbine rotor disc 630 may be restricted.

The torque tube 620 may be formed in an approximately hollow cylindrical shape so that the air supplied from the compressor 100 may flow to the turbine 300 while passing through the torque tube 620.

In particular, the torque tube 620 may be formed to have characteristics resistant to deformation, warping, and the like because the gas turbine 10 consistently operates for a long period of time. The torque tube 620 may be configured to be easily assembled or disassembled to facilitate maintenance.

The tie rod 640 may be formed to penetrate the plurality of compressor rotor discs 610, the torque tube 620, and the plurality of turbine rotor discs 630. One end of the tie rod 640 may be fastened in the compressor rotor disc positioned at a most upstream end based on the flow direction of air among the plurality of compressor rotor discs 610, and the other end of the tie rod 640 may protrude in a direction opposite to the compressor 100 based on the turbine rotor disc 630 positioned at a most downstream end based on the flow direction of the combustion gas among the plurality of turbine rotor discs 630 and be fastened to the fixing nut.

The fixing nut may press the turbine rotor disc 630, which is positioned at the most downstream end, toward the compressor 100. The plurality of compressor rotor discs 610, the torque tube 620, and the plurality of turbine rotor discs 630 may be compressed in the axial direction of the rotor 600 as an interval between the compressor rotor disc 610 positioned at the most upstream end and the turbine rotor disc 630 positioned at the most downstream end is decreased. Therefore, axial movements and relative rotations of the plurality of compressor rotor discs 610, the torque tube 620, and the plurality of turbine rotor discs 630 may be restricted.

In the embodiment of the present disclosure illustrated and described above, the example has been described in which the tie rod penetrates central portions of the plurality of compressor rotor discs, the torque tube, and the plurality of turbine rotor discs 630. However, according to another embodiment of the present disclosure, separate tie rods may be respectively provided at the compressor side and the turbine side. Alternatively, a plurality of tie rods may be radially disposed in the circumferential direction.

According to the above-mentioned configuration, two opposite ends of the rotor 600 may be rotatably supported by bearings, and one end of the rotor 600 may be connected to a driving shaft of an electric generator.

The compressor blades 110 may be provided as a plurality of compressor blades 110, and the plurality of compressor blades 110 may be formed in multiple stages in the axial direction of the rotor 600. The plurality of compressor blades 110 may be radially formed for each stage in a rotation direction of the rotor 600.

Root portions (not illustrated) of the compressor blades 110 may be coupled to the compressor blade coupling slots (not illustrated) of the compressor rotor discs 610. The root portion may be formed in a fir-tree shape to prevent the compressor blade 110 from being separated from the compressor blade coupling slot in a rotation radius direction of the rotor 600. In this case, likewise, the compressor blade coupling slot may be formed in a fir-tree shape to correspond to the root portion of the compressor blade 110.

In the embodiment of the present disclosure illustrated and described above, the example has been described in which the compressor blade root portion and the compressor blade coupling slot are formed in a fir-tree shape. However, according to another embodiment of the present disclosure, the compressor blade root portion and the compressor blade coupling slot may be formed in a dove-tail shape or other shapes. Alternatively, the compressor blade may be fastened to the compressor rotor disc by using separate fastening devices such as fixing devices including keys or bolts.

The compressor rotor disc 610 and the compressor blade 110 may be typically coupled by a tangential type or an axial type. In the case of the embodiment of the present disclosure, a so-called axial type is provided in which the compressor blade root portion is inserted into the compressor blade coupling slot in the axial direction of the rotor 600, as described above.

In particular, the compressor blade coupling slots may be provided as a plurality of compressor blade coupling slots, and the plurality of compressor blade coupling slots may be arranged radially in the circumferential direction of the compressor rotor disc.

The compressor vanes 120 may be provided as a plurality of compressor vanes 120, and the plurality of compressor vanes 120 may be formed in multiple stages in the axial direction of the rotor 600.

In this case, the compressor vanes 120 and the compressor blades 110 may be alternately arranged in the flow direction of the air.

In addition, the plurality of compressor vanes 120 may be formed radially for each stage in the rotation direction of the rotor 600. For example, at least some of the plurality of compressor vanes 120 may be mounted to be rotatable within a predetermined range to adjust the amount of introduction of air or the like.

The combustor 200 may be configured to mix the compressed air, which is supplied from the compressor 100, with fuel and combust the air-fuel mixture under an isobaric condition, thereby producing high-energy combustion gas.

Various combustors capable of mixing the compressed air with fuel and combusting the air-fuel mixture may be used as the combustor 200. The present disclosure is not restricted or limited by the type and structure of the combustor 200.

For example, the combustor 200 may be provided as a plurality of combustors 200, and the plurality of combustors 200 may be arranged in the combustor casing (not illustrated) in the rotation direction of the rotor 600.

The combustor 200 may include a liner (not illustrated) into which the air compressed by the compressor 100 is introduced, and a transition piece (not illustrated) positioned rearward of the liner and configured to guide the combustion gas to the turbine 300. The liner and the transition piece define combustion chambers therein. A sleeve may be disposed to surround the liner and the transition piece, such that an annular flow space may be formed between the sleeve, the liner, and the transition piece.

In addition, the combustor 200 may include a fuel injection nozzle (not illustrated) provided forward of the liner and configured to mix the compressed air, which is supplied from the compressor 100, with fuel and inject the air-fuel mixture, and a spark plug (not illustrated) provided on a wall portion of the liner and configured to ignite the compressed air and the fuel mixed in the combustion chamber of the liner. Thereafter, the combusted gas is discharged to the turbine 300 and generates a rotation.

In this case, it is important to cool the liner and the transition piece, which are exposed to high-temperature, high-pressure combustion gas, to improve the durability of the combustor 200. To this end, a cooling hole (not illustrated) may be formed in the sleeve, and the compressed air introduced through the cooling hole may perpendicularly collide with outer wall portions of the liner and the transition piece, such that the liner and the transition piece may be cooled.

More specifically, the compressed air introduced from the compressor 100 may be introduced into the annular space through the cooling hole formed in the sleeve and cool the liner and the transition piece, and the compressed air may flow to the front side of the liner along the annular space and be introduced into the fuel injection nozzle.

In addition, a de-swirler may be provided between the compressor 100 and the combustor 200 and serve as a guide vane configured to adjust a flow angle of the air introduced into the combustor 200 to a designed flow angle.

The high-temperature, high-pressure exhaust gas, which is produced by the combustor 200, may be supplied to the turbine 300. In the turbine 300, the exhaust gas expands adiabatically, collides with a plurality of blades radially disposed on a rotary shaft of the turbine 300, and applies a reaction force, such that thermal energy of the exhaust gas may be converted into mechanical energy for rotating the rotary shaft.

A part of the mechanical energy produced by the turbine 300 may be utilized as energy required to compress the air in the compressor 100, and the remaining mechanical energy may be utilized as effective energy for operating the electric generator to generate electric power.

The turbine 300 may be formed to be similar to the compressor 100. The turbine 300 may include the turbine blades 320 configured to rotate together with the rotor 600, and turbine vanes 330 fixedly installed on the turbine casing 310 and configured to align a flow of the air introduced to the turbine blades 320.

For example, the turbine blades 320 may be provided as a plurality of turbine blades 320, and the plurality of turbine blades 320 are formed in multiple stages in the axial direction of the rotor 600. The plurality of turbine blades 320 may be radially formed for each stage in the rotation direction of the rotor 600.

Specifically, the turbine blade 320 may include a plate-shaped turbine blade platform portion (not illustrated), a turbine blade root portion (not illustrated) extending from the turbine blade platform portion toward a centripetal side based on the rotation radius direction of the rotor 600, and a turbine blade airfoil portion (not illustrated) extending from the turbine blade platform portion toward a centrifugal side based on the rotation radius direction of the rotor 600.

The turbine blade platform portion may adjoin the adjacent turbine blade platform portions and serve to maintain an interval between the turbine blade airfoil portions.

The root portion of the turbine blade 320 may be coupled to the turbine blade coupling slot of the turbine rotor disc 630. The root portion may be formed in a fir-tree shape to prevent the turbine blade 320 from being separated from the turbine blade coupling slot in the rotation radius direction of the rotor 600. In this case, likewise, the turbine blade coupling slot may be formed in a fir-tree shape to correspond to the root portion of the turbine blade 320. As described above, the root portion of the turbine blade may be formed as a so-called axial type in which the root portion is inserted into the turbine blade coupling slot in the axial direction of the rotor 600.

The turbine blade airfoil portion may be formed to have an airfoil optimized in accordance with the specifications of the gas turbine 10. The turbine blade airfoil portion may include a leading edge positioned at the upstream side based on the flow direction of the combustion gas so that the combustion gas enters through the leading edge, and a trailing edge positioned at the downstream side based on the flow direction of the combustion gas so that the combustion gas exits through the trailing edge.

The turbine vanes 330 may be provided as a plurality of turbine vanes 330, and the plurality of turbine vanes 330 may be formed in multiple stages in the axial direction of the rotor 600. In this case, the turbine vanes 330 and the turbine blades 320 may be alternately arranged in the flow direction of the air. In addition, the plurality of turbine vanes 330 may be formed radially for each stage in the rotation direction of the rotor 600.

For example, the turbine vane 330 may be fixedly mounted (supported) in the turbine housing by a vane carrier 350 that is an end wall coupled to an inner end and an outer end of the turbine vane 330.

Because the turbine 300 comes into contact with high-temperature, high-pressure combustion gas, unlike the compressor 100, the turbine 300 requires a cooling means for preventing damage such as degradation. To this end, a cooling line (not illustrated) may be provided to extract the compressed air from some locations in the compressor 100 and supply the compressed air to the turbine 300.

For example, the cooling line may extend to the outside of the compressor casing (outer line), the cooling line may extend while penetrating the inside of the rotor 600 (inner line), or both the outer line and the inner line may be used.

The cooling line may communicate with a turbine blade cooling flow path (not illustrated) formed in the turbine blade 320, such that the turbine blade 320 may be cooled by the cooling air. In addition, the turbine blade cooling flow path may communicate with a turbine blade film cooling hole formed in a surface of the turbine blade 320, and the cooling air may be supplied to the surface of the turbine blade 320, such that the turbine blade 320 may be so-called film-cooled by the cooling air. Similar to the turbine blade 320, the turbine vane 330 may also be configured to be cooled by receiving the cooling air from the cooling line.

Meanwhile, the turbine 300 requires a gap between a blade end of the turbine blade 320 and an inner circumferential surface of the turbine casing 310 so that the turbine blade 320 may smoothly rotate.

However, a larger gap between the blade end of the turbine blade 320 and the inner circumferential surface of the turbine casing 310 is advantageous in preventing interference between the turbine blade 320 and the turbine casing 310 but disadvantageous in terms of a leak of the combustion gas. The smaller gap plays the opposite role to the larger gap.

That is, the flow of the combustion gas discharged from the combustor 200 may be classified into a main flow that flows over the turbine blade 320, and a leak flow that passes through the gap between the turbine blade 320 and the turbine casing 310. The leak flow increases as the gap is widened, such that interference between the turbine blade 320 and the turbine casing 310 caused by thermal deformation may be prevented, and damage caused by the interference may be prevented, even though the efficiency of the gas turbine 10 deteriorates. In contrast, the leak flow decreases as the gap (the gap between the blade end of the turbine blade 320 and the inner circumferential surface of the turbine casing 310) is narrowed, such that the efficiency of the gas turbine 10 may be improved, but interference between the turbine blade 320 and the turbine casing 310 may be caused by thermal deformation, and damage may be caused by the interference.

In particular, the gas turbine 10 may include ring segments 340 in order to ensure an appropriate gap that may minimize deterioration in efficiency of the gas turbine while preventing interference between the turbine blade 320 and the turbine casing 310, as well as damage caused by the interference.

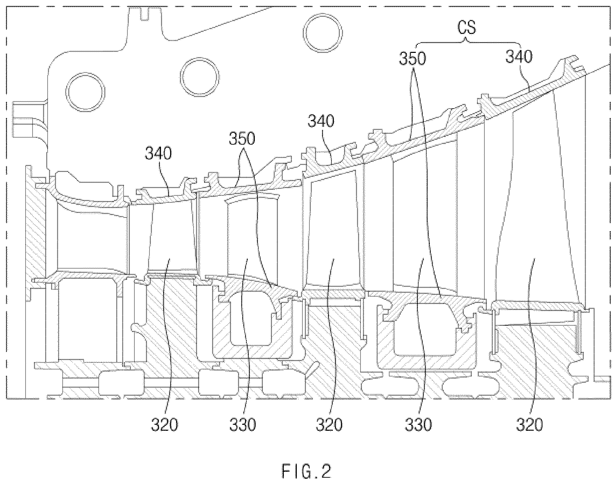

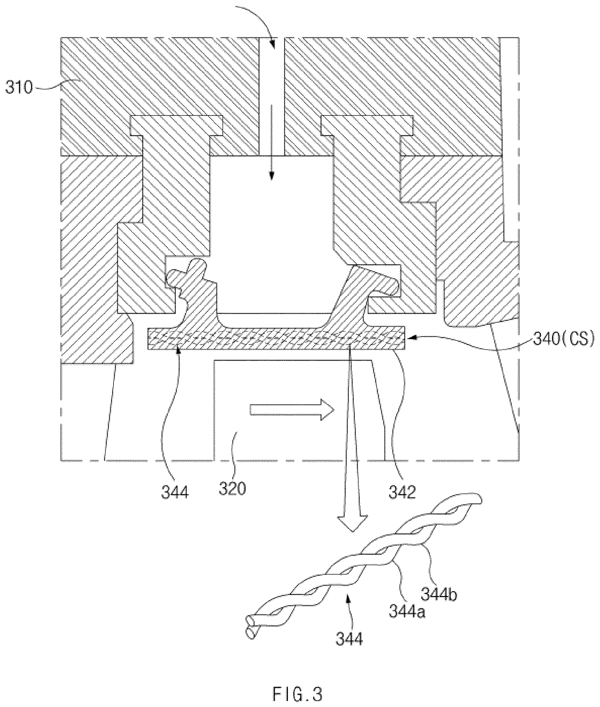

With reference to FIGS. 2 and 3, the ring segment 340 is installed on the inner circumferential surface of the turbine casing 310 and surrounds the turbine blade 320. Specifically, the ring segments 340 are provided as a plurality of ring segments 340 mounted on an inner wall of the turbine casing 310. The plurality of ring segments 340 are continuously disposed in the circumferential direction of the turbine casing 310 and define an approximate ring shape. The plurality of ring segments 340 having ring shapes are disposed outward of the turbine blades 320 and prevent a leak of the combustion gas while surrounding the turbine blades 320. That is, the plurality of ring segments 340 having ring shapes may be formed in multiple stages in a longitudinal direction of a turbine central axis, corresponding to the positions of the turbine blades 320. The ring segments 340 and the turbine vanes 330 may be disposed alternately.

For example, the ring segment 340 may include a shield plate configured to face the inner wall of the turbine casing 310 and extending in the rotation direction of the rotor 600, and a pair of hook portions protruding from the shield plate toward the turbine casing 310. The shield plate may be provided in the form of an approximately quadrangular plate. The hook portion may protrude to be bent in the radial direction of the turbine from an outer surface of the shield plate toward the turbine casing 310, such that the hook portion may be inserted into a groove formed in the turbine casing 310.

Further, because the high-temperature, high-pressure combustion gas passes through the inside of the turbine casing 310, the ring segment 340, particularly a portion of the ring segment 340 (the inner circumferential surface of the ring segment), which faces the internal space of the turbine casing 310, may be damaged by a thermal load. Therefore, the plurality of cooling flow paths 344 may be provided in the ring segment 340 to prevent the above-mentioned problem.

The cooling segment CS is provided on the inner surface of the turbine casing 310 and configured to be exposed to the combustion gas discharged from the combustor 200.

In the embodiment of the present disclosure, the cooling segment CS may be defined as a component disposed in the turbine casing 310, configured to be exposed to the combustion gas, and required to be cooled.

The cooling segment CS may be variously changed in type and structure in accordance with required conditions and design specifications. The present disclosure is not restricted or limited by the type and structure of the cooling segment CS.

According to the exemplary embodiment of the present disclosure, the cooling segment CS may include at least one of the vane carrier 350 provided on the inner surface of the turbine casing 310 and configured to support the turbine vane 330, and the ring segment 340 configured to face the turbine blade 320, spaced apart from the turbine blade 320, and provided on the inner surface of the turbine casing 310.

Hereinafter, an example will be described in which the ring segment 340 is applied as the cooling segment CS.

According to the exemplary embodiment of the present disclosure, the ring segment 340 may include the segment body 342, and the cooling flow path 344 provided in the segment body 342 so that the cooling medium is movable in the cooling flow path 344, the cooling flow path 344 including the first twist flow path 344a helically extending around the preset reference line CL, and the second twist flow path 344b helically extending around the reference line CL collectively with the first twist flow path 344a.

The segment body 342 may have various structures in accordance with required conditions and design specifications. The present disclosure is not restricted or limited by the structure and shape of the segment body 342.

For example, the segment body 342 may include a shield plate configured to face the inner wall of the turbine casing 310 and extending in the rotation direction of the rotor 600, and a pair of hook portions protruding from the shield plate toward the turbine casing 310.

With reference to FIGS. 3 to 5, the cooling flow path 344 is provided in the segment body 342 and includes the first twist flow path 344a and the second twist flow path 344b.

A position at which the cooling flow path 344 is provided in the segment body 342 may be variously changed in accordance with required conditions and design specifications. The present disclosure is not restricted or limited by the position of the cooling flow path 344 and the number of cooling flow paths 344.

Hereinafter, an example will be described in which the plurality of cooling flow paths 344 are provided in the shield plate, which constitutes the segment body 342, in the axial direction of the turbine 300. According to another embodiment of the present disclosure, the cooling flow path may be formed in the circumferential direction of the turbine or formed in other directions. Alternatively, the cooling flow path may be formed in the hook portions, which constitute the segment body, or formed in other portions.

For example, one end of the cooling flow path 344 (e.g., one end of the first twist flow path and one end of the second twist flow path) may communicate with a cooling line extending to the outside of the compressor casing, and a cooling medium (e.g., air) supplied along the cooling line may cool the segment body 342 while moving along the cooling flow path 344.

The first twist flow path 344a and the second twist flow path 344b may be provided to helically extend around the preset reference line CL.

The reference line CL may be defined in accordance with required conditions and design specifications.

For example, the reference line CL may be defined in a straight shape, the first twist flow path 344a may be configured to helically extend around the reference line CL having a straight shape, and the second twist flow path 344b may be configured to helically extend around the reference line CL having the straight shape in such a manner that it interleaves with the first twist flow path 344a.

In the embodiment of the present disclosure illustrated and described above, the example has been described in which the reference line CL is defined in a straight shape. However, according to another embodiment of the present disclosure, the reference line may be defined in a curved shape or other shapes.

The segment body 342 may be manufactured in various ways in accordance with required conditions and design specifications.

According to the exemplary embodiment of the present disclosure, the segment body 342 may be formed by additive manufacturing. The cooling flow path 344 may be integrally provided in the segment body 342 while the segment body 342 is formed by additive manufacturing. For example, the segment body 342 may be manufactured by a 3D printing.

For example, the segment body 342 may be made of a metallic material.

The first twist flow path 344a and the second twist flow path 344b may be provided to have various structures in accordance with required conditions and design specifications. The present disclosure is not restricted or limited by the structures and shapes of the first twist flow path 344a and the second twist flow path 344b.

According to the exemplary embodiment of the present disclosure, the first twist flow path 344a and the second twist flow path 344b may be provided to helically extend around the reference line CL in the same direction based on the reference line CL.

For example, the first twist flow path 344a and the second twist flow path 344b may be provided to helically extend around the reference line CL in a clockwise direction based on the reference line CL.

According to another embodiment of the present disclosure, one of the first twist flow path and the second twist flow path may be configured to helically extend around the reference line in the clockwise direction based on the reference line CL, and the other of the first twist flow path and the second twist flow path may be configured to helically extend around the reference line in a counterclockwise direction based on the reference line.

According to the exemplary embodiment of the present disclosure, the first twist flow path 344a and the second twist flow path 344b may be provided to have circular cross-sections.

In particular, the first twist flow path 344a and the second twist flow path 344b may be provided to have the same diameter D1.

According to another embodiment of the present disclosure, the first twist flow path and the second twist flow path may have different diameters or different cross-sectional areas. Alternatively, the first twist flow path and the second twist flow path may be configured to have quadrangular cross-sections, triangular cross-sections, or other cross-sectional shapes.

The first twist flow path 344a and the second twist flow path 344b may be variously changed in diameters in accordance with required conditions and design specifications. The present disclosure is not restricted or limited by the diameters of the first twist flow path 344a and the second twist flow path 344b.

According to the exemplary embodiment of the present disclosure, the diameter of each of the first twist flow path 344a and the second twist flow path 344b may be in a range of 0.6 mm to 3 mm.

This is based on the fact that it is very difficult to process (manufacture) the first twist flow path 344a and the second twist flow path 344b and to smoothly move the cooling medium when the diameter of each of the first twist flow path 344a and the second twist flow path 344b is smaller than 0.6 mm, and it is difficult to ensure the structural rigidity of the segment body 342 when the diameter of each of the first twist flow path 344a and the second twist flow path 344b is larger than 3 mm. In the embodiment of the present disclosure, the diameter of each of the first twist flow path 344a and the second twist flow path 344b is in a range of 0.6 mm to 3 mm. Therefore, it is possible to obtain an advantageous effect of ensuring the structural rigidity of the segment body 342 and ensuring the smooth manufacturing of the first twist flow path 344a and the second twist flow path 344b.

According to the exemplary embodiment of the present disclosure, a center of each of the first and second twist flow paths 344a and 344b may lie on a reference circle centered on the reference line CL.

In this case, the configuration in which the centers of the first and second twist flow paths 344a and 344b lie on the reference circle centered on the reference line CL may be defined as a configuration in which the first twist flow path 344a and the second twist flow path 344b have the same spiral radius (D2/2) based on the reference line CL.

In this case, the reference circle may have various sizes in accordance with required conditions and design specifications. The present disclosure is not restricted or limited by the size of the reference circle.

According to the exemplary embodiment of the present disclosure, a diameter D2 of the reference circle may be in a range of 2 mm to 9 mm.

This is based on the fact that it is difficult to ensure the structural rigidity of the segment body 342 when the diameter D2 of the reference circle is smaller than 2 mm, and it is difficult to ensure a sufficient heat transfer coefficient of the segment body 342 when the diameter of the reference circle is larger than 9 mm. In the embodiment of the present disclosure, the diameter D2 of the reference circle, which defines torsional trajectories of the first twist flow path 344a and the second twist flow path 344b, is in a range of 2 mm to 9 mm. Therefore, it is possible to obtain an advantageous effect of ensuring the structural rigidity of the segment body 342 and ensuring a sufficient heat transfer coefficient of the segment body 342.

Torsional angles of the first and second twist flow paths 344a and 344b with respect to the reference line CL may be variously changed in accordance with required conditions and design specifications. The present disclosure is not restricted or limited by the torsional angles of the first and second twist flow paths 344a and 344b with respect to the reference line CL.

According to the exemplary embodiment of the present disclosure, torsional angles θ1, θ2, θ3, and θ4 of the first and second twist flow paths 344a and 344b with respect to the reference line CL may be in a range of 10 degrees to 60 degrees.

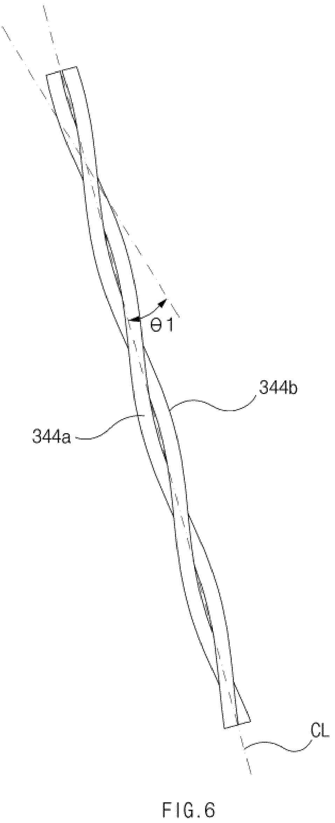

For example, with reference to FIG. 6, the torsional angle θ1 of the first and second twist flow paths 344a and 344b with respect to the reference line CL may be defined as 10 degrees.

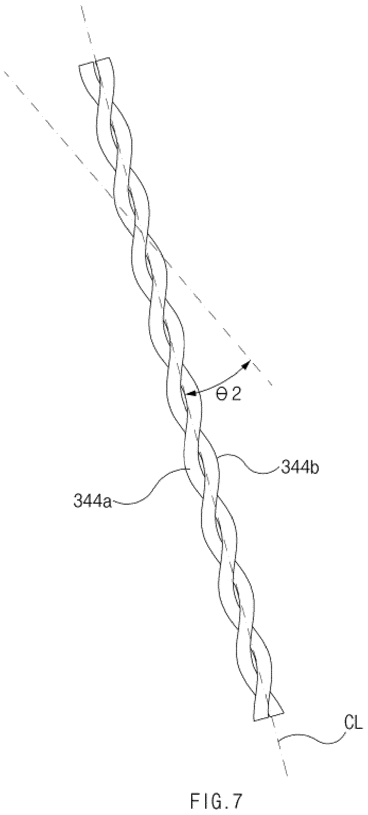

In another example, with reference to FIG. 7, the torsional angle θ2 of the first and second twist flow paths 344a and 344b with respect to the reference line CL may be defined as 30 degrees.

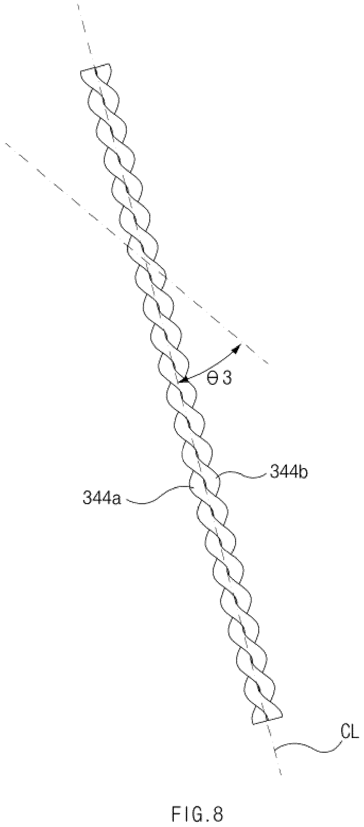

In another example, with reference to FIG. 8, the torsional angle θ3 of the first and second twist flow paths 344a and 344b with respect to the reference line CL may be defined as 45 degrees.

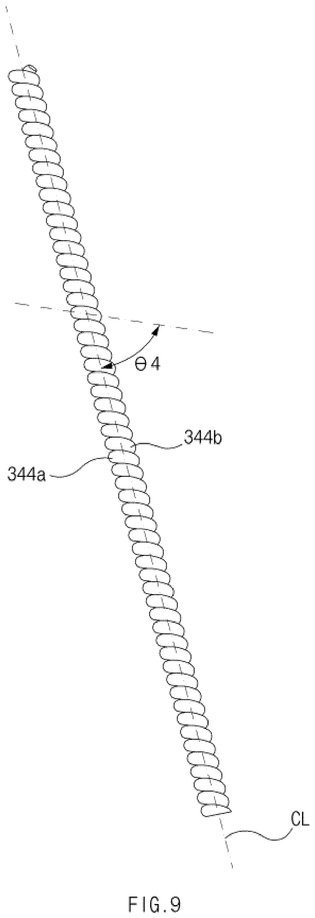

In another example, with reference to FIG. 9, the torsional angle θ4 of the first and second twist flow paths 344a and 344b with respect to the reference line CL may be defined as 60 degrees.

This is based on the fact that the heat exchange areas of the first and second twist flow paths 344a and 344b with respect to the segment body 342 are decreased and the heat exchange efficiency deteriorates when the torsional angle of the first and second twist flow paths 344a and 344b with respect to the reference line CL is smaller than 10 degrees, and it is difficult to manufacture the first and second twist flow paths 344a and 344b with respect to the segment body 342 by additive manufacturing and the improvement of cooling performance is not significant when the torsional angle of the first and second twist flow paths 344a and 344b with respect to the reference line CL is larger than 60 degrees. In the embodiment of the present disclosure, the torsional angles θ1, θ2, θ3, and θ4 of the first and second twist flow paths 344a and 344b with respect to the reference line CL are in the range of 10 degrees to 60 degrees. Therefore, it is possible to obtain an advantageous effect of sufficiently ensuring the heat exchange areas of the first and second twist flow paths 344a and 344b with respect to the segment body 342 (cooling performance implemented by the first and second twist flow paths) and improving the manufacturing efficiency and productivity.

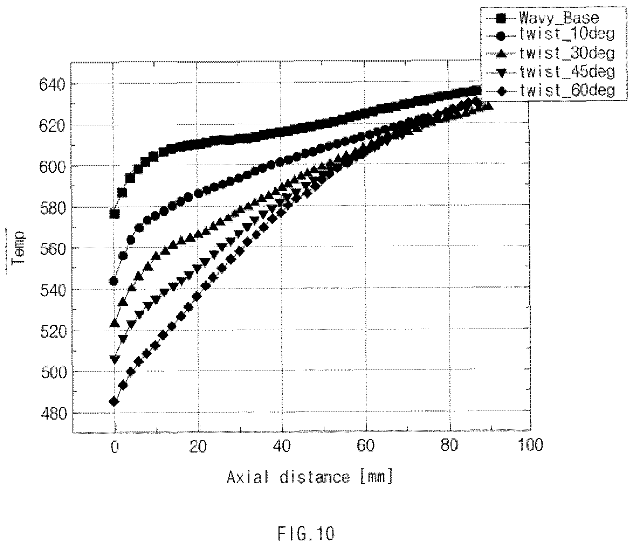

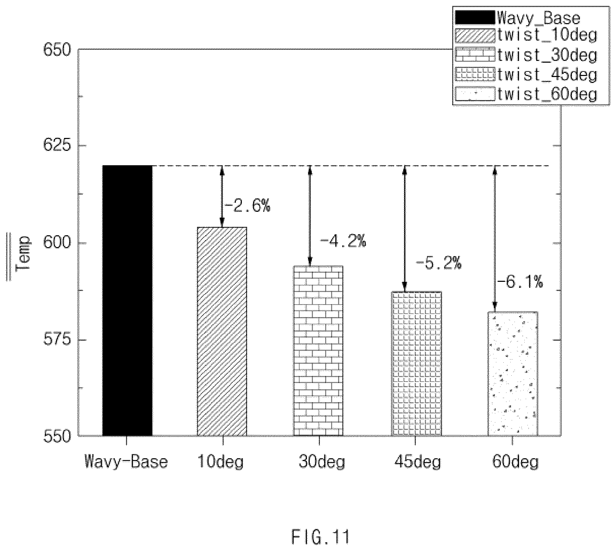

Meanwhile, FIGS. 10 and 11 are views for explaining temperatures of the cooling segment CS in accordance with torsional angles of the first and second twist flow paths 344a and 344b with respect to the reference line CL.

For reference, FIGS. 10 and 11 are graphs illustrating results of thermal flow analyses (results of Computational Fluid Dynamics) related to the cooling segment CS in accordance with torsional angles of the first and second twist flow paths 344a and 344b with respect to the reference line CL.

With reference to FIGS. 10 and 11, it can be ascertained that the temperature of the cooling segment CS is decreased as the torsional angles of the first and second twist flow paths 344a and 344b with respect to the reference line CL are increased.

In particular, it can be ascertained that when the cooling segment CS includes the cooling flow path 344, where the torsional angle θ4 of the first and second twist flow paths 344a and 344b with respect to the reference line CL is defined as 60 degrees, sufficient heat exchange areas between the first and second twist flow paths 344a and 344b with respect to the segment body 342 may be ensured. As a result, the temperature is significantly reduced compared to the cooling segment CS in the related art in which the cooling flow path 344 having a circular tube shape (e.g., a circular tube flow path having a wave shape) is applied. Therefore, it can be seen that the increase in heat exchange areas of the first and second twist flow paths 344a and 344b with respect to the segment body 342 is more advantageous in improving the performance and efficiency in cooling the cooling segment CS.

While the embodiments have been described above, the embodiments are just illustrative and not intended to limit the present disclosure. It can be appreciated by those skilled in the art that various modifications and applications, which are not described above, may be made to the present embodiment without departing from the intrinsic features of the present embodiment. For example, the respective constituent elements specifically described in the embodiments may be modified and then carried out. Further, it should be interpreted that the differences related to the modifications and applications are included in the scope of the present disclosure defined by the appended claims.

### [Description of Reference Numerals]

10: Gas turbine
20: Sealing assembly
100: Compressor
110: Compressor blade
120: Compressor vane
200: Combustor
300: Turbine
310: Turbine casing
320: Turbine blade
330: Turbine vane
340: Ring segment
342: Segment body
344: Cooling flow path
344a: First twist flow path
344b: Second twist flow path
350: Vane carrier
600: Rotor
610: Compressor rotor disc
620: Torque tube
630: Turbine rotor disc
640: Tie rod

## Claims

1. A cooling segment comprising:
a segment body; and
a cooling flow path provided in the segment body so that a cooling medium is movable in the cooling flow path, the cooling flow path comprising a first twist flow path helically extending around a preset reference line, and a second twist flow path helically extending around the reference line collectively with the first twist flow path.

2. The cooling segment of claim 1, wherein the segment body is formed by additive manufacturing, and the cooling flow path is integrally provided in the segment body while the segment body is formed by the additive manufacturing.

3. The cooling segment of claim 1, wherein the first and second twist flow paths helically extend around the reference line in a same direction based on the reference line.

4. The cooling segment of claim 1, wherein each of the first and second twist flow paths is provided to have a circular cross-section.

5. The cooling segment of claim 4, wherein the first and second twist flow paths are provided to have a same diameter.

6. The cooling segment of claim 5, wherein a diameter of each of the first and second twist flow paths is in a range of 0.6 mm to 3 mm.

7. The cooling segment of claim 5, wherein a center of each of the first and second twist flow paths lies on a reference circle centered on the reference line.

8. The cooling segment of claim 7, wherein a diameter of the reference circle is in a range of 2 mm to 9 mm.

9. The cooling segment of claim 5, wherein a torsional angle of each of the first and second twist flow paths with respect to the reference line is in a range of 10 degrees to 60 degrees.

10. A gas turbine comprising:
a compressor configured to suck in and compress air;
a combustor configured to mix the air, which is compressed by the compressor, with fuel and combust an air-fuel mixture; and
a turbine comprising a turbine casing, a turbine vane provided on an inner surface of the turbine casing, a turbine blade rotatably provided in the turbine casing, and a cooling segment provided on the inner surface of the turbine casing and configured to be exposed to combustion gas discharged from the combustor,
wherein the cooling segment comprises:
a segment body provided on the inner surface of the turbine casing and configured to be exposed to the combustion gas; and
a cooling flow path provided in the segment body and comprising a first twist flow path helically extending around a preset reference line, and a second twist flow path helically extending around the reference line collectively with the first twist flow path.

11. The gas turbine of claim 10, wherein the cooling segment comprises at least one of a vane carrier provided on the inner surface of the turbine casing and configured to support the turbine vane, and a ring segment configured to face the turbine blade, spaced apart from the turbine blade, and provided on the inner surface of the turbine casing.

12. The gas turbine of claim 10, wherein the segment body is formed by additive manufacturing, and the cooling flow path is integrally provided in the segment body while the segment body is formed by the additive manufacturing.

13. The gas turbine of claim 10, wherein the first and second twist flow paths helically extend around the reference line in a same direction based on the reference line.

14. The gas turbine of claim 10, wherein each of the first and second twist flow paths is provided to have a circular cross-section.

15. The gas turbine of claim 14, wherein the first and second twist flow paths are provided to have a same diameter.
